# EUROPÄISCHE PATENTANMELDUNG

(11) **EP 1 022 674 A2**
(43) Veröffentlichungstag der Anmeldung: **26.07.2000**
(21) Anmeldenummer: 99126109.0
(22) Anmeldetag: 29.12.1999
(51) Int. Cl.: G06K 7/10

(54) **System zur automatischen Identifikation von wenigstens einem Transponder in einem elektromagnetischen Feld einer Basisstation**

(30) Priorität: 20.01.1999 DE 19901984
(71) Anmelder: Stobbe, Anatoli, 30890 Barsinghausen (DE)
(72) Erfinder: Stobbe, Anatoli, D-30890 Barsinghausen (DE); Merk, Holger, D-30890 Barsinghausen (DE)
(74) Vertreter: Patentanwälte Thömen & Körner

(57) **Zusammenfassung**

Es wird ein System zur automatischen Identifikation von wenigstens einem Transponder in einem elektromagnetischen Feld einer Basisstation beschrieben.

Beim Eintritt in das Feld der Basisstation wird der Transponder aktiviert und veranlaßt, Identifikationsdaten zu senden. Nach einer erfolgreichen Identifikation durch die Basisstation wird dem Transponder von dieser ein individueller Antwortkanal in Form einer Sendefrequenz und/oder eines Zeitschlitzes zugewiesen. In den Antwortkanälen werden wiederholt anschließende Transponderdaten gesendet, insbesondere erfolgen Identifikationen und/oder Anwesenheitsnachweise der im elektromagnetischen Feld der Basisstation befindlichen Transponder.

## Beschreibung

Die Erfindung betrifft ein System zur automatischen Identifikation von wenigstens einem Transponder in einem elektromagnetischen Feld einer Basisstation nach dem Oberbegriff des Anspruchs 1.

Identifikationstechniken werden immer häufiger in den unterschiedlichsten Anwendungsbereichen für Personen, Tiere oder Waren und andere Gegenstände verwendet. Beispielsweise werden Identifikationssysteme eingesetzt, um nur bestimmten autorisierten Personen den Zugang zu geschützten Räumen oder auch zu einem Gebäude zu ermöglichen. Ein weiteres Anwendungsgebiet besteht in der Verfolgung mobiler Gegenstände für logistische Zwecke oder zur Sicherung von Wertgegenständen.

Dazu werden die Personen, Tiere, oder Gegenstände mit Transpondern ausgestattet, in denen Identifikationsdaten gespeichert sind. Die Transponder verfügen über einen Sender und einen Empfänger für einen Datenaustausch mit einer Basisstation. Ein Datenaustausch kommt zustande, sobald der Transponder in das elektromagnetische Feld der Basisstation eintritt.

Der maximal überbrückbare Abstand zwischen dem Transponder und der Antenne der Basisstation richtet sich einerseits danach, ob der Transponder aktiv oder passiv arbeitet, d. h. seinen Sender und Empfänger aus einer eigenen Energiequelle speist oder seine Energie von der Basisstation bezieht, und andererseits nach der benutzten Sendeleistung der Basisstation und der Betriebsfrequenz. Mit aktiven Transpondern läßt sich bei einer Frequenz im NF-Bereich bis 150 kHz und einer Sendeleistung der Basisstation in der Größenordnung von einem Watt beispielsweise eine Entfernung von mehreren Metern überbrücken.

Dadurch entstehen Einzugsbereiche, in denen sich gleichzeitig mehrere Transponder aufhalten können. Diese Einzugsbereiche lassen sich noch vergrößern, wenn von der Basisstation mehrere räumlich getrennte Sendeantennen verwendet werden.

Es gibt Anwendungsfälle, z.B. bei der Sicherung von Wertgegenständen oder der Raumüberwachung, bei denen die Basisstation Informationen benötigt, ob sich der Transponder noch in ihrem Einzugsbereich befindet, um während des Aufenthalts im Einzugsbereich eine sicherer Kommunikation zu ermöglichen. Eine sichere Kommunikation zwischen Basisstation und Transponder kann dadurch erschwert werden, daß sich mehrere Transponder im Einzugsbereich der Basisstation befinden und gegenseitig stören.

Mit der Problematik mehrerer Transponder im Einzugsbereich einer Basisstation befaßt sich die US 5 124 699. Allerdings geht es hier um eine erstmalige Identifikation. Es wird eine Lösung beschrieben, bei der die Transponder vereinzelt werden, wenn sich eine unbekannte Anzahl von Transpondern gleichzeitig im Feld der Basisstation befindet, so daß nacheinander jeder Transponder für sich alleine identifiziert werden kann. Dabei ist vorgesehen, zunächst nur einen einzigen Transponder auszuwählen und die anderen Transponder zeitweise daran zu hindern, daß sie ihre Transponderdaten aussenden.

Nachdem der ausgewählte Transponder anhand seiner Transponderdaten durch die Basisstation identifiziert worden ist, wird dieser Transponder blockiert und die verbleibenden anderen Transponder werden wieder eingeschaltet. Diese Schritte werden nach und nach wiederholt, bis alle Transponder abgearbeitet sind.

In der DE 195 26 353 A1 ist darüber hinaus angegeben, daß nach einer vollständigen Erstidenfikation die Transponder, welche das Feld der Basisstation nicht mehr empfangen, dann Transponderdaten zur Signalisierung ihrer Abwesenheit senden und diese Transponderdaten von der Basisstation ausgewertet werden. Voraussetzung ist hier, daß die Sendereichweite der Transponder größer als der Wirkungsbereich des elektrischen Feldes der Basisstation ist und die Transponder eine eigene Energiequelle haben.

Alternativ ist beschrieben, daß die Transponder wiederholt Transponderdaten zur Signalisierung ihrer Anwesenheit senden und diese Transponderdaten von der Basisstation ausgewertet werden. Angaben darüber, wie die Aussendung der Transponderdaten gesteuert oder koordiniert wird, um nicht eine erneute Kollision zu verursachen, enthält die Veröffentlichung nicht.

Der Erfindung liegt die Aufgabe zugrunde, ein System zur automatischen Identifikation von wenigstens einem Transponder in einem elektromagnetischen Feld einer Basisstation zu schaffen, welches nach einer ersten Identifikation eine koordinierte Verwaltung der identifizierten Transponder ermöglicht.

Diese Aufgabe wird bei einem System nach dem Oberbegriff des Anspruchs 1 durch die Merkmale des Anspruchs 1 gelöst. Weiterbildung und vorteilhafte Ausgestaltungen der Erfindung ergeben sich aus den Unteransprüchen.

Die erfindungsgemäße Lösung basiert auf folgenden Überlegungen. Werden die Aussendungen der Transponderdaten vom Transponder z.B. nach Zufallskriterien bestimmt, so kann, besonders bei einer Vielzahl von Transpondern im Einzugsbereich der Basisstation gehäuft eine Kollision gleichzeitiger oder sich überlappender Aussendungen stattfinden. In dem Falle müßten die Aussendungen der Transponder wieder selektiert werden oder es müßte abgewartet werden, daß aufgrund der Zufallszeiten bei den Aussendungen später wieder Identifikationsdaten der Transponder ungestört empfangen werden können.

Dies kann allerdings die Zeitspanne zwischen aufeinander folgenden Identifikationen in unerwünschter Weise erhöhen und damit die Sicherheit des Systems verschlechtern.

Eine andere Möglichkeit besteht darin, daß die einzelnen Transponder nacheinander von der Basisstation adressiert werden und daraufhin ihre Identifikationsdaten aussenden.

Dies ist zwar bei einigen wenigen Transpondern eine mögliche Lösung, führt aber mit wachsender Zahl der Transponder zu einer Überlastung des Übertragungskanals, besonders wenn auch noch Zeiten reserviert werden müssen, in denen neue Transponder in das Feld der Basisstation gelangen und auch diese noch, eventuell unter Anwendung von Antikollisionsverfahren, identifiziert werden müssen.

Bei der erfindungsgemäßen Lösung wird den identifizierten Transpondern jeweils ein individueller Antwortkanal zugewiesen, in dem anschließende Transponderdaten gesendet werden, insbesondere Identifikationen oder Anwesenheitsnachweise erfolgen. Der Begriff Transponderdaten steht hier allgemein für Daten, die der Transponder aussendet. Dies können u. a. Identifikationsdaten zur individuellen Kennzeichnung des Transponders z. B. die vollständige Identifkationsnummer oder die verkürzte Identifkationskennung sein. Ferner können es Anwesenheitsdaten mit der allgemeinen Bedeutung sein, daß sich der Transponder im Erfassungsbereich der Basisstation befindet, oder es können Positionsdaten mit einem speziellen lokalen Informationsgehalt sein. Weiter fallen unter Transponderdaten auch Zustandsdaten z. B. über seine Batteriespannung oder andere gespeicherte, gemessene oder generierte Werte.

Dadurch wird eine Kollision der Aussendungen der Transponder vermieden, denn die Aussendungen sind nun durch die Art der individuellen Antwortkanäle, nämlich durch die Sendefrequenz und/oder durch die Zeitschlitze koordiniert und stören sich nicht mehr gegenseitig. Dabei ist es unerheblich, ob die Transponder selbständig ihre Aussendungen veranlassen, oder von der Basisstation zur Aussendung veranlaßt werden. Sofern sie die Einteilung der Antwortkanäle beachten, lassen sich die Aussendungen den einzelnen Transpondern zuordnen.

Bei Veranlassung der Aussendung durch die Basisstation ergibt sich so auch der Vorteil, daß ein für alle Transponder oder Gruppen von Transpondern gemeinsames Kommando ausreicht, um koordinierte Identifikations- oder Anwesenheitsdaten der Transponder zu veranlassen. Es muß also nicht jeder einzelne Transponder adressiert werden, wodurch der zu übertragende Umfang der Daten reduziert und damit die Übertragungsstrecke entlastet wird.

Gemäß einer Weiterbildung können die nach einer ersten oder erneuten Identifikation anschließenden Identifikationen oder Anwesenheitsnachweise der im elektromagnetischen Feld der Basisstation befindlichen Transponder zusätzlich und/oder ausschließlich durch Auswertung der Antwortkanäle erfolgen, in denen die Aussendungen wenigstens eines platzhaltenden Signals stattfinden.

Bei dieser Weiterbildung wird ausgenutzt, daß durch die Zuweisung der Transponder zu individuellen Antwortkanälen diese Antwortkanäle anschließend selbst die Transponder repräsentieren. Es kommt dann also gar nicht mehr darauf an, die Inhalte der Aussendungen in diesen Antwortkanälen auswerten zu müssen, sondern die Tatsache, daß Aussendungen in einem Antwortkanal stattfinden, ist bereits ein Kriterium für die Zuordnung dieser Aussendung zu einem Transponder.

Das platzhaltende Signal kann aus einem Puls und/oder einer Pulsfolge und/oder einer Bitfolge und/oder einem Datenwort mit oder ohne Prüfkennung bestehen oder einen Puls und/oder eine Pulsfolge und/oder eine Bitfolge und/oder ein Datenwort mit oder ohne Prüfkennung umfassen.

Somit kann sich im einfachsten Fall die Aussendung eines Transponders in seinem individuellen Antwortkanal lediglich auf einen kurzen Platzhalter, z.B. in Form eines HF-Pulses, beschränken. Für eine routinemäßige Abfrage der Anwesenheitsnachweise mit dem Verzicht auf eine Identifikationsnummer bringt diese Maßnahme erhebliche Geschwindigkeitsvorteile, wodurch die Belegung der Übertragungskanäle für die Übertragung der Identifikationsdaten extrem reduziert wird. Um sich sicherer gegen Störungen abzuheben kann das platzhaltende Signal aber auch länger sein, um so eine Optimierung zwischen möglichst geringer Übertragungszeit einerseits und Störsicherheit, Unterscheidbarkeit und Identifizierbarkeit andererseits zu erreichen.

Gemäß einer Weiterbildung kann der Transponder als platzhaltendes Signal oder Bestandteil des platzhaltenden Signals oder zusätzlich in seinem Antwortkanal Angaben über seine Position und/oder über seinen Zustand übermitteln.

Dabei kann der Transponder seine Position als kodierte Nummer aus einer gegebenen Menge numerierter örtlicher Bereiche übermitteln.

Es ist dadurch möglich, routinemäßig und/oder gegebenenfalls mit den verkürzten Identifikations- oder Anwesenheitsdaten die Position zu übermitteln, wodurch eine eindeutige Zuordnung der in der Aussendung kodierten Position mit dem sie aussendenden Transponder gegeben ist. Wenn die Position als kodierte Nummer aus einer gegebenen Menge numerierter örtlicher Bereiche übermittelt wird, entfällt auf die Positionsangabe auch nur eine kurze Bitfolge, die wenig Übertragungszeit benötigt.

Diese Maßnahme ist dann von besonderer Bedeutung, wenn gleichzeitig eine Vielzahl von Transpondern auf ihre Position überwacht werden und eine rasche Meldung der Positionen, insbesondere im Sicherheitsbereich gewünscht ist. In diesem Fall könnten nämlich lange Übertragungszeiten ein Sicherheitsrisiko darstellen, wenn beispielsweise der Zeitraum zwischen dem Erkennen einer unzulässigen Position und dem Absetzen der Meldung vom Transponder an die Basisstation so viel Zeit verstreicht, daß der Transponder den Einzugsbereich der Basisstation während der Übermittlung verläßt oder bereits verlassen hat und somit seine Meldung nicht mehr vollständig oder überhaupt nicht mehr übermitteln kann.

Eine Anwendungsmöglichkeit für die Aussendung von Angaben über den Zustand wäre ein Absinken der Batteriekapazität, die eine Aufladung der Energiequelle oder einen Austausch erforderlich macht, um die Funktion des Transponders auch für die Zukunft zu sichern.

Weiterhin ist vorgesehen, daß im Falle von der Basisstation nicht empfangener oder nicht auswertbarer Identifikationsdaten, insbesondere durch eine Kollision der vom Transponder gesendeten Identifikationsdaten mit von anderen Transpondern gesendeten Daten oder mit Störungen, die Aussendung der Identifikationsdaten wiederholt wird.

Mit dieser Maßnahme wird erreicht, daß bei auftretenden Störungen, die eine Erstidentifikation oder eine erneute Identifikation bei Wiedereintritt in das Feld der Basisstation beeinträchtigen, weitere Schritte unternommen werden, um anfangs fehlgeschlagene Identifikation doch noch erfolgreich durchzuführen. Es können dabei an sich bekannte Antikollisionsverfahren angewendet werden.

Dem Transponder kann zusätzlich eine Identitätskennung zugewiesen werden, die er in seinem Antwortkanal aussendet und die weniger Informationen umfaßt als seine vollständige Identifikationsnummer.

Dies kann zweckmäßig sein, um über die Auswertung des Antwortkanals eine weitere Plausibilitätsprüfung zu ermöglichen. Dies steigert die Zuverlässigkeit der gewonnenen Informationen und vermeidet mögliche Fehlentscheidungen, ohne jedoch die vollständige Identifikationsnummer übertragen und auswerten zu müssen.

Der Transponder kann automatisch wiederholt und/oder nach Anforderung durch die Basisstation Aussendungen in seinem Antwortkanal vornehmen. Bei der automatischen Wiederholung würde der Übertragungskanal durch den Fortfall von Anforderungssignalen der Basisstation entlastet. Allerdings ergibt sich ein Problem, daß die Aussendungen bei unpräzisen Zeitbasen der Transponder nach einiger Zeit nicht mehr synchron ablaufen. In diesem Fall kann auch eine Kombination der automatischen Wiederholung und der Anforderung durch die Basisstation sinnvoll sein, um von Zeit zu Zeit wieder eine Synchronisation herbeizuführen.

Eine Weiterbildung sieht vor, daß bei Überschreiten einer vorgegebenen Anzahl von Transpondern im elektromagnetischen Feld der Basisstation Gruppen gebildet und die Transponder unterschiedlichen Gruppen zugewiesen werden und daß die Antwortkanäle gruppenweise zugeteilt werden.

Diese Maßnahme kann zweckmäßig sein, wenn die zur Verfügung stehenden Antwortkanäle nicht ausreichen, um die vorhandene Anzahl der Transponder aufzunehmen. Bei nach Sendefrequenzen aufgeteilten Antwortkanälen kann dies durch die begrenzte Anzahl der vorhandenen und zugelassenen Kanäle bedingt sein. Bei Zeitschlitzen besteht das Problem, daß hier durch Toleranzen der Zeitbasen bedingt nicht mehr gewährleistet ist, ob auch noch die letzten Aussendungen in einer zeitlichen Reihenfolge so präzise gestartet und beendet werden können, daß sie in die dafür vorgesehenen Zeitschlitze fallen. Wenn das nicht sichergestellt werden kann, ist es besser, kürzere Zeitrahmen vorzusehen, da dann die Wahrscheinlichkeit, daß die Aussendungen nach einer Sendeaufforderung noch in die vorgesehenen Zeitschlitze fallen, größer ist.

Außerdem ermöglicht die Zuweisung der Transponder zu Gruppen auch die Zuweisung unterschiedlicher Prioritäten für die Häufigkeit der Aussendungen. So können dann die einer Gruppe angehörenden Transponder öfter zu Aussendungen von Identifikations- oder Anwesenheitsdaten veranlaßt werden als die Gruppe anderer Transponder.

Es kann vorgesehen sein, daß der Transponder seine Aussendungen nach einer Zeitfunktion automatisch wiederholt und diese Zeitfunktion durch die Baisstation einzeln oder zusammen mit anderen Transpondern in einer Gruppe programmierbar und/oder änderbar ist. Auch auf diese Weise lassen sich Prioritäten zuweisen, um so die Häufigkeit der Aussendungen z.B. nach sicherheitsrelevanten Kriterien zu erhöhen oder zu vermindern.

Bei Unterschreiten einer vorgegebenen Anzahl von Transpondern können im elektromagnetischen Feld der Basisstation die zu unterschiedlichen Gruppen zusammengefaßten Transponder anderen, nicht vollständig besetzten Gruppen, zugewiesen werden und unbesetzte Gruppen aufgelöst werden.

Wenn die Transponder Gruppen zugewiesen wurden, ist die Häufigkeit, in der sie Identifikationsdaten oder Anwesenheitsdaten aussenden, verringert, da ja jeweils die einzelnen Gruppen unterschiedlich adressiert werden müssen und somit insgesamt mehr Zeit für die Datenübertragung benötigt wird.

Die Zuweisung einzelner Transponder zu anderen Gruppen und die Auflösung der dann leeren Gruppen reduziert den zu übertragenden Datenumfang und entlastet damit den Übertragungskanal bzw. ermöglicht eine beschleunigte Wiederholung der Aussendungen der Identifizierungs- oder Anwesenheitsdaten.

Eine andere Variante sieht vor, daß bei Unterschreiten einer vorgegebenen Anzahl von Transpondern im elektromagnetischen Feld der Basisstation die zu unterschiedlichen Gruppen gehörenden Transponder zu einer Gruppe oder einer kleineren Anzahl Gruppen verschmolzen werden.

Diese Maßnahme ähnelt der vorgenannten Maßnahme mit der Zuweisung zu anderen Gruppen und Auflösung unbesetzter Gruppen. Sie kombiniert jedoch mehrere Einzelanweisungen, nämlich die Zuordnung zu anderen Gruppen und die Auflösung von Gruppen zu einer einzigen Anweisung, wodurch die Übertragungszeit für diese Anweisung reduziert wird.

Außerdem kann die zum Empfangen der Aussendungen in den Antwortkanälen reservierte Zeit dynamisch an die Anzahl der belegten Antwortkanäle angepaßt werden.

Damit ist eine Optimierung der benötigten Zeit sowohl bei Erhöhung als auch bei Erniedrigung der belegten Antwortkanäle möglich.

So kann vorgesehen sein, daß nach Entfernen einzelner Transponder aus dem elektromagnetischen Feld der Basisstation und daraus resultierender zeitlicher Lücken in der Abfolge der belegten Zeitschlitze der verbleibenden Transponder den noch im elektromagnetischen Feld befindlichen Transpondern andere aufeinander folgenden Zeitschlitze zugewiesen werden.

Hierdurch läßt sich die Zykluszeit mit oder ohne Gruppenbildung verringern, wenn bei der Abfrage der im Feld befindlichen Transponder nicht mehr die Zeitschlitze abgewartet werden müssen, die nicht mehr von Transpondern belegt sind.

Von der Basisstation kann zyklisch ein Wecksignal für neu in das elektromagnetische Feld eintretende Transponder ausgesendet und anschließend das Eintreffen von Identifikationsdaten abgewartet werden. Es wird dann nur bei empfangenen Identifikationsdaten anschließend eine Zeitspanne für die Zuweisung eines Antwortkanals reserviert, ehe die Aussendungen der bereits Antwortkanälen zugewiesenen Transponder veranlaßt und diese Aussendungen empfangen werden. Sonst wird bei Ausbleiben von Identifikationsdaten keine Zeitspanne für die Zuweisung eines Antwortkanals reserviert.

Auch hierdurch ist eine weitere Zeitoptimierung möglich, da bei Ausbleiben neu in das Feld eintretender Transponder natürlich keine Auswertung nötig ist und damit die sonst hierfür reservierte Zeit verkürzt oder eingespart werden kann. Es kann dann der Beginn des weiteren Datendialogs bzw. der wiederholten Identifizierungen der bereits im Feld befindlichen Transponder vorgezogen werden.

Gemäß einer Weiterbildung können bereits während der Zeitspanne, in der Transponderdaten empfangen werden, von der Basisstation Aussendungen veranlaßt werden, insbesondere von Kommandos zur Neuzuweisung von Antwortkanälen oder zur Gruppenumbildung der bereits Antwortkanälen zugewiesenen Transponder.

In diesem Fall wird durch die Möglichkeit, beim Duplexverkehr gleichzeitig Daten vom Transponder zur Basisstation und umgekehrt zu übertragen, die Zeitspanne für den Empfang von Transponderdaten zur Aussendung von Kommandos durch die Basisstation ausgenutzt. Hierbei sind Kommandos möglich, die nicht eine unmittelbare Antwort durch Aussendung der Transponder zur Folge haben, sondern nur eine interne Datenverarbeitung oder Zuweisung bewirken. Die Verschachtelung der Zeiten, in denen derartige Kommandos übertragen werden, mit Zeiten, in denen Transponder Transponderdaten senden, führt weiterhin zu einer besseren Ausnutzung des Übertragungskanals der Basisstation beim Senden und zu einer Verkürzung der möglichen Zyklen bei wiederholter Identifikation.

Gemäß einer Weiterbildung wird die Belegung der für die belegbaren Antwortkanäle möglichen Frequenzen von der Basisstation überwacht und die Zuweisung der Antwortkanäle abhängig von der bei der Überwachung übermittelten Belegung der Frequenzen vorgenommen.

Hierbei wird durch die Basisstation im Vorfeld geklärt, welche Frequenzen bzw. Kanäle für eine Belegung überhaupt in Frage kommen, damit später eine einwandfreie Kommunikation zwischen Transponder und Basisstation möglich ist. Dies ist besonders dann wichtig, wenn die benutzbaren Kanäle auch von anderen Diensten verwendet werden können oder bereits von benachbarten ähnlichen Systemen belegt werden und wegen der räumlichen Nähe eine Beeinflussung stattfindet.

Ferner kann mit dem von der Basisstation zyklisch ausgesendeten Wecksignal die Zuweisung zu einer Frequenz und/oder einem Zeitschlitz zum Transponder übermittelt werden, auf der die Basisstation für Transponderdaten empfangsbereit ist.

Auf diese Weise wird bereits bei der Identifikation versucht, den Transpondern einen freien Kanal zuzuweisen. Wäre nämlich ein allgemeiner Antwortkanal für eine erste Identifikation vorgesehen und dieser Antwortkanal belegt, so wäre bereits eine Erstidentifikation erschwert oder unmöglich. Durch die beschriebene Maßnahme wird dieser Gefahr vorgebeugt. Auch könnte bereits in dieser Phase die Zuweisung eines individuellen Antwortkanals für wiederholte Identifizierungs- oder Anwesenheitsdaten vorgenommen werden.

Zusätzlich kann auch eine Angabe über die Anzahl und/oder Art der verfügbaren Antwortkanäle oder der Frequenzen übermittelt werden.

Dadurch können die Transponder bereits intern so organisiert werden, daß Aussendungen auf anderen Antwortkanälen, die somit nicht verfügbar sind, vermieden werden. Durch die Angabe der Anzahl der Antwortkanäle lassen sich dann auch bei der Zuweisung zu Antwortkanälen oder beim Aufruf einfachere Codes mit weniger Unterscheidungsmöglichkeiten übertragen, so daß auch hierdurch weniger Übertragungskapazität benötigt wird. Vorteilhaft sind die Angaben auch, wenn mehrere Gruppen gebildet oder Gruppen aufgelöst oder verschmolzen werden.

Bei mehreren zu einer Basisstation gehörenden Sendern und/oder Antennen kann zusammen mit dem von der Basisstation zyklisch ausgesendeten Wecksignal auch eine individuelle Kennung des weckenden Senders und/oder der weckenden Antenne der Basisstation zum Transponder übermittelt werden, die zur globalen Zuordnung des Transponders dient.

Dadurch ist bereits eine grobe Standortbestimmung des Transponders bei seiner ersten Identifikation möglich oder auch die Bestimmung einer Richtung, aus der der Transponder in das Feld der Basisstation eingetreten ist.

Eine Weiterbildung sieht vor, daß bei Zuweisung der Transponder zu Gruppen den Gruppen unterschiedliche Frequenzen als Antwortkanäle zugewiesen werden und daß Aussendungen der unterschiedlichen Gruppen angehörenden Transponder parallel vorgenommen und empfangen werden.

Bei dieser Lösung wird durch Anwenden des Frequenzmultiplexverfahrens erreicht, daß trotz der Bildung mehrerer Gruppen eine kurze Zykluszeit bei der Abfrage der Transponder erreicht wird, da die Identifikations- oder Anwesenheitsdaten jetzt nicht gruppenweise nacheinander sondern gruppenweise parallel übertragen werden können.

Die Basisstation kann mehrere Empfänger umfassen, die auf dieselbe Frequenz abgestimmt sind und deren Antennen räumlich getrennt angeordnet sind. Die Signale der Empfänger können im Diversitybetrieb ausgewertet werden.

Durch diese Maßnahme ist es möglich, einmal den Einzugsbereich der Basisstation für den Empfang der Transponder zu vergrößern, zum anderen aber auch bei gegebenem Einzugsbereich diesen besser und gleichmäßiger erfassen zu können. Durch Richtwirkung der Antennen der Transponder sowie durch Reflektionen oder Abschattungen können sonst nämlich Nullstellen entstehen, in denen der Transponder von der Basisstation nicht empfangen werden kann. Durch Anordnung mehrerer räumlich voneinander getrennter Antennen lassen sich diese Nullstellen weitgehend beseitigen. Die Auswertung im Diversitybetrieb ermöglicht zudem, lokale Störungen, die nicht auf alle Empfangsantennen wirken, auszublenden oder von einzelnen Sendern unvollständig empfangene Aussendungen der Transponder zu korrigieren oder zu vervollständigen.

Weiterhin kann vorgesehen sein, daß der Transponder für eine vorgebbare Zeit oder eine vorgebbare Anzahl von Eintritten in das Feld einer Basisstation deaktiviert und/oder lediglich zur Aussendung seiner Identifikationsdaten umgeschaltet wird.

Diese Maßnahme ermöglicht es, einen Transponder, der beispielsweise zur Sicherung eines transportablen Computers dient, zu deaktivieren, damit der Computer von einer berechtigten Person aus einem Sicherheitsbereich mitgenommen werden kann, ohne daß dieser Vorgang Alarm auslöst und ohne daß während unnötiger Identifizierungsvorgänge die Energiequelle des Transponders belastet wird.

Alternativ ist es möglich, daß die Basisstation für eine vorgebbare Zeit oder eine vorgebbare Anzahl von Eintritten eines Transponders in ihr Feld für Meldungen dieses Transponders deaktiviert wird oder zur Ausblendung oder Unterdrückung von Meldungen dieses Transponders umgeschaltet wird.

Hier wird zwar nicht der Transponder ausgeschaltet, es wird aber gezielt die Basisstation für diesen Transponder deaktiviert, damit beim gleichen Anwendungsfall wie vorher beschrieben, kein Alarm ausgelöst wird, wenn der Computer mit dem Transponder aus einem Sicherheitsbereich in erlaubter Weise entfernt wird.

Die Erfindung betrifft ferner eine Basisstation für ein derartiges System nach dem Oberbegriff des Anspruchs 27 und einen Transponder nach dem Oberbegriff des Anspruchs 29.

Diesbezüglich liegt ihr die Aufgabe zugrunde, eine Basisstation bzw. einen Transponder zu schaffen, die eine koordinierte Verwaltung der identifizierten Transponder im elektromagnetischen Feld einer Basisstation ermöglichen.

Diese Aufgabe wird bei einer Basisstation nach dem Oberbegriff des Anspruchs 27 bzw. einem Transponder nach dem Oberbegriff des Anspruchs 29 durch die Merkmalen des jeweiligen Anspruchs gelöst.

So ist vorgesehen, daß die Basisstation Transpondern mit einer Empfangs- und Sendevorrichtung unterschiedliche Antwortkanäle für deren Aussendungen zuweist.

Die Basisstation kann auch mit einer Empfangs- und Auswertevorrichtung für Transponderdaten ausgestattet sein und mittels der Auswertevorrichtung aus den Zuweisungen der Transponder zu unterschiedlichen Antwortkanälen eine Identifikation der Transponder durchführen.

Die Transponder können mit einer Sende,- Empfangs- und Auswertevorrichtung ausgestattet sein und einem individuellen Antwortkanal für seine Aussendungen zuweisbar sein.

Ferner kann jeder Transponder anstelle seiner vollständigen Identifikationsnummer durch Aussendungen in seinem Antwortkanal an sich oder durch eine gegenüber der Identifikationsnummer verkürzte Identifikationskennung individuell identifizierbar sein.

Außerdem kann der Transponder durch Auswertung unterschiedlicher Feldeigenschaften einer Basisstation selbständig seine Position ermitteln und diese in seinem und/oder einem zusätzlichen Antwortkanal übermitteln und/oder abhängig von seiner Position ein Alarmsignal übermitteln.

Auch ist es möglich, daß der Transponder die Übertragungsstrecke seines Antwortkanals überwacht und bei Störungen oder Unterbrechungen ein Alarmsignal auf einem zusätzlichen Antwortkanal aussendet.

Ein Transponder mit einer Sende,- Empfangs- und Auswertevorrichtung kann auch bei gleichzeitigem Eintritt mehrerer Transponder in das Feld einer Basisstation zuerst an einer Kollisionsauflösung teilnehmen und anschließend wenigstens einmal Identifikations- und/oder Anwesenheitsdaten senden und/oder seine Position ermitteln und wenigstens einmal Positionsdaten senden.

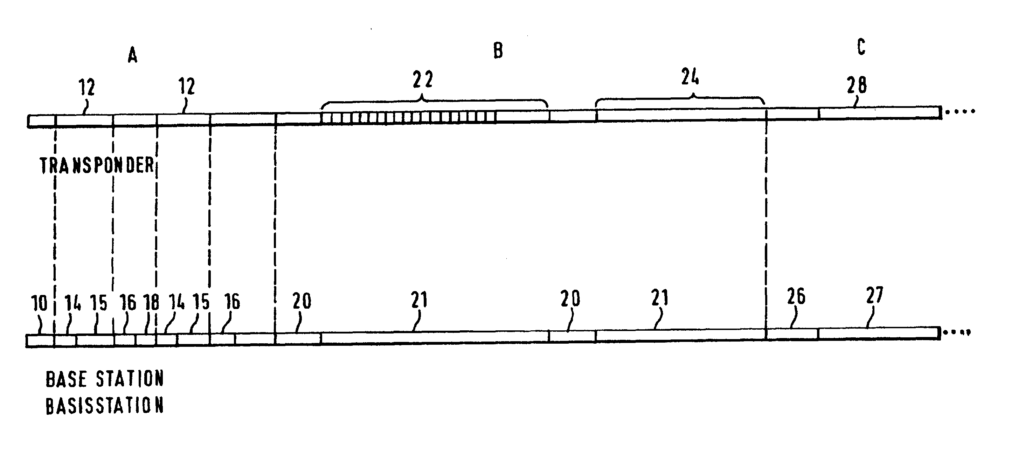

Nachfolgend wird die Erfindung anhand eines Ausführungsbeispiels näher erläutert, das durch die Zeichnung erläutert wird.

Die Zeichnung veranschaulicht ein Zeitdiagramm für Aussendungen von Transpondern und von der Basisstation.

Die Aussendungen sind in einen zeitliche Rahmen zusammengefaßt, der zyklisch wiederholt wird. Dieser Rahmen umfaßt eine erste Phase A, in der eine Identifikation neu oder wieder in das Feld einer Basisstation eintretender Transponder sowie deren Zuweisung zu Antwortkanälen vorgenommen wird. Darauf schließt sich eine Phase B an, in der von den Transpondern, die bereits identifiziert wurden, Aussendungen in ihren Antwortkanälen erfolgen. Den Abschluß bildet eine Phase C, die für sonstige, individuell steuerbaren Aussendungen vorbehalten ist.

Ein Rahmen beginnt in Phase A zuerst mit der Aussendung eines Wecksignals durch die Basisstation, die in einen Zeitabschnitt 10 fällt. Dieses Wecksignal ist für alle neu in das elektromagnetische Feld der Basisstation eintretenden Transponder bestimmt. Der Transponder, der aus einem Ruhezustand heraus das Wecksignal empfängt, sendet anschließend in einer Zeitspanne 12 seine Identifikationsnummer. Dabei kann ihm durch das Wecksignal auch schon bereits ein Antwortkanal für diese Aussendung zugewiesen werden.

Sobald die Basisstation in der Zeitspanne 12 eine Identifikationsnummer empfängt, sendet sie in der Zeitspanne 14 ein Belegtsignal, das alle neu in das Feld eingetretenen Transponder, die noch nicht mit ihrer Aussendung der Identifikationsnummer begonnen haben, davon in Kenntnis setzt, daß der Antwortkanal bereits benutzt wird. Auf diese Weise können Kollisionen mit mehreren neu in das Feld eintretenden Transpondern vermieden werden. Der Transponder, der zuerst mit seiner Aussendung begonnen hat, setzt diese fort und überträgt seine vollständige Identifikationsnummer in der Zeitspanne 12. Daraufhin wird dem identifizierten Transponder in einer Zeitspanne 16 ein Antwortkanal und gegebenenfalls eine verkürzte neue Identifikationskennung zugewiesen.

In der Phase A können auch noch ein oder mehrere Wiederholungszyklen vorgesehen seien, für den Fall, daß aufgrund von Störungen oder Kollisionen keiner der in das Feld neu eingetretenen Transponder beim ersten mal erkannt werden konnte. Außerdem kann vorgesehen sein, daß nach einer ersten Identifikation gleich anschließend noch ein weiterer Transponder identifiziert und ihm ebenfalls ein Antwortkanal und gegebenenfalls eine verkürzte neue Identifikationskennung zugewiesen wird.

In diesem Fall würde in einer Zeitspanne 18 ein Aufforderungssignal zur weiteren Identifikation ausgesendet, das ähnlich wie das Wecksignal 10 aufgebaut sein kann. Daran könnten sich nochmals Zeitspannen 12 für die Identifikation anschließen, in denen wieder beim Empfang eine Identifikationsnummer ein Belegtsignal 14 ausgesendet wird und anschließend in einer Zeitspanne 16 nach Beendigung der Aussendung des Transponders (in der Zeitspanne 12) eine Zuweisung des identifizierten Transponders zu einem Antwortkanal erfolgt. Es ist möglich, diese Zeitabfolge mehrmals zu wiederholen, bis mit der Phase B fortgesetzt wird oder auch jeweils nur ein bis zwei Identifikationsversuche durchzuführen und erst nach dem Abarbeiten des vollständigen zeitlichen Rahmens eine erneute Identifikation durchzuführen.

In einer Zeitspanne 15, die nach der Zeitspanne 14 beginnt und sich mit dem letzten Teil der Zeitspanne 12 deckt, in welcher ein neu in das Feld der Basisstation eingetretener Transponder mit der Übertragung von Identifikationsdaten beschäftigt ist, kann die Basisstation ihrerseits Kommandos an die übrigen Transponder senden.

Für den Fall, daß nach dem ersten Wecksignal keinerlei Identifikationsdaten von neu in das Feld eintretenden Transpondern erkannt werden, könnte auch die restliche in der Phase A hierfür reservierte Zeit verkürzt und gleich die Phase B angeschlossen werden. Alternativ ist es auch möglich, außer in der Zeitspanne 15 zusätzlich in der Zeitspanne 16 Kommandos zu übertragen, die an die im Feld befindlichen und bereits identifizierten Transponder gerichtet sind.

Am Anfang der Phase B wird in einer Zeitspanne 20 von der Basisstation ein Anforderungssignal zur Aussendung von Anwesenheitsdaten oder ergänzend Zustands- und/oder Positionsdaten gesendet. Daran schließt sich eine Zeitspanne 22 an, in der die Transponder entsprechend den ihnen zugewiesenen Zeitschlitzen Antwortsignale aussenden. Wenn die Zeitschlitze individuell den einzelnen Transpondern zugewiesen sind, reicht es für eine Identifizierung oder Feststellung der Anwesenheit aus, wenn überhaupt irgendeine Aussendung in dem Zeitschlitz erfolgt. Ergänzend kann jedoch auch in diesem Zeitschlitz eine kodierte Information über die Position oder über eine Zustand, z.B. den Ladezustand der Energiequelle übermittelt werden. Ähnlich wie die Zeitspanne 15 in Phase A kann auch in Phase B eine Zeitspanne 21 vorgesehen sein, in der die Basisstation parallel zu den Aussendungen der Transponder in der Zeitspanne 22 Kommandos sendet.

Sofern eine Vielzahl von Transpondern im Feld vorhanden ist, deren Anzahl größer als die Zahl der zuordnerbaren Zeitschlitze ist, werden die Transponder unterschiedlichen Gruppen zugeordnet. Diese Gruppen werden dann in der Zeitspanne 20 einzeln aufgefordert, ihre Identifikations- oder Anwesenheitsdaten abzusenden. Es ist möglich, daß alle Gruppen nacheinander in der Phase B zur Abgabe von Antwortsignalen aufgefordert werden, z. B. eine zweite Gruppe in der Zeitspanne 24. Alternativ kann die Aufforderung in der Phase B auch nur an einen Teil der vorhandenen Gruppen ergehen, während die anderen Gruppen dann in einem späteren Zyklus abgefragt werden.

In einer Phase C besteht schließlich die Möglichkeit, gezielt gesonderte Kommandos an mehrere oder einzelne Transponder zu übermitteln und Antworten von denen zu empfangen und auszuwerten. So kann vorgesehen sein, nach einer Reihe von vollständigen Zyklen, bei denen die Phasen A bis C durchlaufen werden und die Transponder nur kurze Anwesenheitsdaten aussenden, die Transponder in der Zeitspanne 26 einzeln zu adressieren und zur Aussendung ihrer vollständigen Identifikationsnummer in der Zeitspanne 28 aufzufordern. Dies dient in Zeitabständen zur Kontrolle, daß die antwortenden Transponder auch noch der vorgenommenen Zuweisung entsprechen. Weiterhin können in der Phase C auch Kommandos übertragen werden, die zur Programmierung oder Änderung der Arbeitsweise dienen. Weiter ist es möglich, Daten zu übertragen, die im Transponder gespeichert werden. Ebenso ist es möglich, andere zusätzlich zur Identifikationsnummer gespeicherte Daten abzufragen.

Ähnlich wie in den Phasen A und B besteht auch in Phase C wieder die Möglichkeit, daß die Basisstation parallel zur Aussendung der Transponders selbst in einer Zeitspanne 27 Kommandos sendet. Durch das Einschachteln von Kommandos der Basisstation in von den Transpondern benutzte Sendezeiten wird die Übertragungskapazität des Senders der Basisstation optimal genutzt. Dies ist besonders wichtig, wenn wegen der Wahl einer niedrigen Trägerfrequenz im NF-Bereich nur eine geringen maximale Datenrate bei Senden zur Verfügung steht.

## Patentansprüche

1. System zur automatischen Identifikation von wenigstens einem Transponder in einem elektromagnetischen Feld einer Basisstation, durch das der Transponder aktiviert und veranlaßt wird, Identifikationsdaten zu senden, **dadurch gekennzeichnet,** daß dem Transponder nach einer erfolgreichen Identifikation durch die Basisstation von dieser jeweils ein individueller Antwortkanal in Form einer Sendefrequenz und/oder eines Zeitschlitzes zugewiesen wird und daß in den Antwortkanälen wenigstens einmal oder wiederholt anschließende Transponderdaten gesendet werden, insbesondere Identifikationen und/oder Anwesenheitsnachweise der im elektromagnetischen Feld der Basisstation befindlichen Transponder erfolgen.

2. System nach Anspruch 1, **dadurch gekennzeichnet,** daß nach einer ersten oder erneuten Identifikation anschließende Identifikationen oder Anwesenheitsnachweise der im elektromagnetischen Feld der Basisstation befindlichen Transponder zusätzlich und/oder ausschließlich durch Auswertung der Antwortkanäle erfolgen, in denen Aussendungen wenigstens eines platzhaltenden Signals stattfinden.

3. System nach Anspruch 2, **dadurch gekennzeichnet,** daß das platzhaltende Signal aus einem Puls und/oder einer Pulsfolge und/oder einer Bitfolge und/oder einem Datenwort mit oder ohne Prüfkennung besteht oder einen Puls und/oder eine Pulsfolge und/oder eine Bitfolge und/oder ein Datenwort mit oder ohne Prüfkennung umfaßt.

4. System nach einem der Ansprüche 1 bis 3, **dadurch gekennzeichnet,** daß der Transponder als platzhaltendes Signal oder Bestandteil des platzhaltenden Signals oder zusätzlich in seinem Antwortkanal Angaben über seine Position und/oder über seinen Zustand übermittelt.

5. System nach Anspruch 3, **dadurch gekennzeichnet,** daß der Transponder seine Position als kodierte Nummer aus einer gegebenen Menge numerierter örtlicher Bereiche übermittelt.

6. System nach einem der Ansprüche 1 bis 5, **dadurch gekennzeichnet,** daß im Falle von der Basisstation nicht empfangener oder nicht auswertbarer Identifikationsdaten, insbesondere durch eine Kollision der vom Transponder gesendeten Identifikationsdaten mit von anderen Transpondern gesendeten Daten oder mit Störungen, die Aussendung der Identifikationsdaten wiederholt wird.

7. System nach einem der Ansprüche 1 bis 6, **dadurch gekennzeichnet,** daß dem Transponder zusätzlich eine Identifikationskennung zugewiesen wird, die er in seinem Antwortkanal aussendet und die weniger Informationen umfaßt, als seine vollständige Identifikationsnummer.

8. System nach einem der Ansprüche 1 bis 7, **dadurch gekennzeichnet,** daß der Transponder automatisch wiederholt und/oder nach Anforderung durch die Basisstation Aussendungen in seinem Antwortkanal vornimmt.

9. System nach einem der Ansprüche 1 bis 8, **dadurch gekennzeichnet,** daß bei Überschreiten einer vorgegebenen Anzahl von Transpondern im elektromagnetische Feld der Basisstation Gruppen gebildet und die Transponder unterschiedlichen Gruppen zugewiesen werden und daß die Antwortkanäle gruppenweise zugeteilt werden.

10. System nach Anspruch 8 oder 9, **dadurch gekennzeichnet,** daß der Transponder seine Aussendungen nach einer Zeitfunktion automatisch wiederholt und diese Zeitfunktion durch die Basisstation einzeln oder zusammen mit anderen Transpondern in einer Gruppe programmierbar und/oder änderbar ist.

11. System nach Anspruch 8 oder 9, **dadurch gekennzeichnet,** daß der Transponder durch die Basisstation zur Durchführung von Aussendungen in seinem Antwortkanal einzeln oder zusammen mit anderen Transpondern in einer Gruppe adressiert und aufgefordert wird.

12. System nach einem der Ansprüche 9 bis 11, **dadurch gekennzeichnet,** daß bei Unterschreiten einer vorgegebenen Anzahl von Transpondern im elektromagnetischen Feld der Basisstation die zu unterschiedlichen Gruppen zusammengefaßten Transponder anderen, nicht vollständig besetzten Gruppen zugewiesen werden und unbesetzte Gruppen aufgelöst werden.

13. System nach einem der Ansprüche 9 bis 11, **dadurch gekennzeichnet,** daß bei Unterschreiten einer vorgegebenen Anzahl von Transpondern im elektromagnetischen Feld der Basisstation die zu unterschiedlichen Gruppen zusammengefaßten Transponder zu einer oder mehreren Gruppen verschmolzen werden.

14. System nach Anspruch 13, **dadurch gekennzeichnet,** daß die Transponder durch ein einziges Kommando der Basisstation veranlaßt werden, zu einer oder mehreren Gruppen zu verschmelzen.

15. System nach einem der Ansprüche 1 bis 14, **dadurch gekennzeichnet,** daß die zum Empfangen der Aussendungen in den Antwortkanälen reservierte Zeit dynamisch an die Anzahl der belegten Antwortkanäle angepaßt wird.

16. System nach einem der Ansprüche 1 bis 15, **dadurch gekennzeichnet,** daß nach Entfernen einzelner Transponder aus dem elektromagnetischen Feld der Basisstation und daraus resultierender zeitlicher Lücken in der Abfolge der Zeitschlitze der verbleibenden Transponder den noch im elektromagneteischen Feld befindlichen Transpondern andere aufeinanderfolgende Zeitschlitze zugewiesen werden.

17. System nach einem der Ansprüche 1 bis 16, **dadurch gekennzeichnet,** daß von der Basisstation zyklisch ein Wecksignal für neu in das elektromagnetische Feld eintretende Transponder ausgesendet wird und anschließend das Eintreffen von Identifikationsdaten abgewartet wird und daß nur bei empfangenen Identifikationsdaten anschließend eine Zeitspanne für die Zuweisung eines Antwortkanals reserviert wird, ehe die Aussendungen der bereits Antwortkanälen zugewiesenen Transponder veranlaßt und empfangen werden, während bei Ausbleiben von Identifikationsdaten keine Zeitspanne für die Zuweisung eines Antwortkanals reserviert wird.

18. System nach einem der Ansprüche 1 bis 17, **dadurch gekennzeichnet,** daß bereits während der Zeitspanne, in der Transponderdaten empfangen werden, von der Basisstation Aussendungen veranlaßt werden, insbesondere von Kommandos zur Neuzuweisung von Antwortkanälen oder zur Gruppenumbildung der bereits Antwortkanälen zugewiesenen Transponder.

19. System nach einem der Ansprüche 1 bis 18, **dadurch gekennzeichnet,** daß die Belegung der für die belegbaren Antwortkanäle möglichen Frequenzen von der Basisstation überwacht wird und daß die Zuweisung der Antwortkanäle abhängig von der bei der Überwachung ermittelten Belegung der Frequenzen vorgenommen wird.

20. System nach einem der Ansprüche 1 bis 19, **dadurch gekennzeichnet,** daß mit dem von der Basisstation zyklisch ausgesendeten Wecksignal die Zuweisung zu einer Frequenz und/oder einem Zeitschlitz zum Transponder übermittelt wird, auf der Transponderdaten von der Basisstation empfangen werden.

21. System nach Anspruch 20, **dadurch gekennzeichnet,** daß zusätzlich auch eine Angabe über die Anzahl und/oder Art der verfügbaren Antwortkanäle oder Frequenzen übermittelt wird.

22. System nach einem der Ansprüche 1 bis 21, **dadurch gekennzeichnet,** daß bei mehreren zu einer Basisstation gehörenden Sendern und/oder Antennen zusammen mit dem von der Basisstation und/oder den Antennen zyklisch ausgesendeten Wecksignal eine individuelle Kennung des weckenden Senders der Basisstation zum Transponder übermittelt wird, die zur globalen Zuordnung des Transponders dient.

23. System nach einem der Ansprüche auf 9 bis 22, **dadurch gekennzeichnet,** daß bei Zuweisung der Transponder zu Gruppen den Gruppen unterschiedliche Frequenzen als Antwortkanäle zugewiesen werden und daß Aussendungen der unterschiedlichen Gruppen angehörenden Transponder parallel vorgenommen und empfangen werden.

24. System nach einem der Ansprüche 1 bis 23, **dadurch gekennzeichnet,** daß die Basisstation mehrere Empfänger umfaßt, die auf dieselbe Frequenz abgestimmt sind und deren Antennen räumlich getrennt angeordnet sind und daß die Signale der Empfänger im Diversitybetrieb ausgewertet werden.

25. System nach einem der Ansprüche 1 bis 24, **dadurch gekennzeichnet,** daß der Transponder für eine vorgebbare Zeit oder eine vorgebbare Anzahl von Eintritten in das Feld einer Basisistation deaktiviert und/oder lediglich zur Aussendung seiner Identifikationsdaten umgeschaltet wird.

26. System nach einem der Ansprüche 1 bis 25, **dadurch gekennzeichnet,** daß die Basisstation für eine vorgebbare Zeit oder eine vorgebbare Anzahl von Eintritten eines Transponders in ihr Feld für Meldung dieses Transponders deaktiviert wird oder zur Ausblendung oder Unterdrückungen von Meldungen dieses Transponders umgeschaltet wird.

27. Basisstation mit einer Sendevorrichtung, **dadurch gekennzeichnet,** daß sie Transpondern mit einer Empfangs- und Sendevorrichtung unterschiedliche Antwortkanäle für deren Aussendungen zuweist.

28. Basisstation mit einer Empfangs- und Auswertevorrichtung für Transponderdaten, **dadurch gekennzeichnet,** daß sie mittels der Auswertevorrichtung aus den Zuweisungen der Transponder zu unterschiedlichen Antwortkanälen eine Identifikation der Transponder durchführt.

29. Transponder mit einer Sende,- Empfangs- und Auswertevorrichtung, **dadurch gekennzeichnet,** daß der Transponder einem individuellen Antwortkanal für seine Aussendungen zuweisbar ist.

30. Transponder nach Anspruch 29, **dadurch gekennzeichnet,** daß er anstelle seiner vollständigen Identifikationsnummer durch Aussendungen an sich oder durch eine gegenüber der Identifikationsnummer verkürzte Identifikationskennung individuell identifizierbar ist.

31. Transponder nach Anspruch 29 oder 30, **dadurch gekennzeichnet,** daß er durch Auswertung unterschiedlicher Feldeigenschaften einer Basisstation selbständig seine Position ermittelt und diese in seinem und/oder einem zusätzlichen Antwortkanal übermittelt und/oder abhängig von seiner Position ein Alarmsignal übermittelt.

32. Transponder nach einem der Ansprüche 29 bis 31, **dadurch gekennzeichnet,** daß er die Übertragungsstrecke seines Antwortkanals überwacht und bei Störungen oder Unterbrechungen ein Alarmsignal auf einem zusätzlichen Antwortkanal aussendet.

33. Transponder mit einer Sende,- Empfangs- und Auswertevorrichtung, **dadurch gekennzeichnet,** daß er bei gleichzeitigem Eintritt mehrerer Transponder in das Feld einer Basisstation zuerst an einer Kollisionsauflösung teilnimmt und anschließend wenigstens einmal Identifikations- und/oder Anwesenheitsdaten sendet und/oder seine Position ermittelt und wenigstens einmal Positionsdaten sendet.
